(19) **Europäisches Patentamt**
**European Patent Office**
**Office européen des brevets**

(11) **EP 2 034 642 B1**

(12) **EUROPÄISCHE PATENTSCHRIFT**

(45) Veröffentlichungstag und Bekanntmachung des Hinweises auf die Patenterteilung:
**26.10.2011  Patentblatt 2011/43**

(51) Int Cl.:
*H04J 3/06* *(2006.01)*          *H04L 12/40* *(2006.01)*

(21) Anmeldenummer: **07017615.1**

(22) Anmeldetag: **07.09.2007**

(54) **Verfahren zur Übertragung von Synchronisationsnachrichten in einem Kommunikationsnetz**

Method for transmitting synchronisation messages in a communications network

Procédé destiné à la transmission d'informations de synchronisation dans un réseau de communication

(84) Benannte Vertragsstaaten:
**DE FR GB IT**

(43) Veröffentlichungstag der Anmeldung:
**11.03.2009  Patentblatt 2009/11**

(73) Patentinhaber: **SIEMENS AKTIENGESELLSCHAFT**
**80333 München (DE)**

(72) Erfinder:
• **Götz, Franz-Josef**
 **91180 Heideck (DE)**
• **Na, Chongning**
 **81671 München (DE)**
• **Obradovic, Dragan, Dr.**
 **85521 Ottobrunn (DE)**
• **Scheiterer, Ruxandra, Dr.**
 **82538 Geretsried (DE)**
• **Steindl, Günter**
 **92284 Poppenricht (DE)**

(56) Entgegenhaltungen:
**EP-A- 1 717 978          WO-A-02/13430**
**WO-A-98/06194          WO-A-03/047134**
**US-A1- 2004 141 526**

• JASPERNEITE J ET AL: "Enhancements to the time synchronization standard IEEE-1588 for a system of cascaded bridges" FACTORY COMMUNICATION SYSTEMS, 2004. PROCEEDINGS. 2004 IEEE INTERNATIONAL WORKSHOP ON VIENNA, AUSTRIA SEPT. 22-24, 2004, PISCATAWAY, NJ, USA,IEEE, 22. September 2004 (2004-09-22), Seiten 239-244, XP010756406 ISBN: 0-7803-8734-1
• DAVID V. JAMES: "Residential Ethernet: Time-of-day timer synchronization"[Online] Juli 2005 (2005-07), Seiten 1-20, XP002466929 Gefunden im Internet: URL:http://www.ieee802.org/1/files/ public/ docs2005/resb-dvj-SyncSlides-051204.pdf> [gefunden am 2008-01-30]

EP 2 034 642 B1

**Beschreibung**

Die Erfindung betrifft ein Verfahren zur Übertragung von Synchronisationsnachrichten in einem Kommunikationsnetz sowie ein entsprechendes Kommunikationsnetz.

In einer Vielzahl von technischen Gebieten werden Kommunikationsnetze dazu verwendet, um dezentral Arbeitsabläufe zu steuern. Insbesondere in industriellen Automatisierungsanlagen ist es von besonderer Wichtigkeit, dass die automatischen Arbeitsvorgänge genau aufeinander abgestimmt sind. Dies wird dadurch erreicht, dass die einzelnen, miteinander kommunizierenden Netzknoten in dem Kommunikationsnetz interne Uhren aufweisen, wobei zur Synchronisation aller internen Uhren Synchronisationsnachrichten übertragen werden. Die interne Uhr eines jeweiligen Netzknotens arbeitet hierbei mit einer entsprechenden Knotentaktfrequenz, die für die einzelnen Netzknoten gegebenenfalls unterschiedlich sein kann. Die Synchronisation der Uhren erfolgt auf der Basis einer vorgegebenen Synchronisationstaktfrequenz, wobei die Synchronisationsnachrichten in Abhängigkeit von der Synchronisationsfrequenz übertragen werden. Dies bedeutet, dass in festen Taktabständen gemäß der Synchronisationstaktfrequenz Synchronisationsnachrichten übermittelt werden. Die einzelnen, im Kommunikationsnetz übertragenen Synchronisationsnachrichten enthalten den Taktzählzustand der Synchronisationsuhr. Jeder Netzknoten aktualisiert diesen Taktzählzustand, indem er die Anzahl an Takten der Synchronisationsuhr zwischen Aussenden der Synchronisationsnachricht beim vorhergehenden Netzknoten und Empfangen der Synchronisationsnachricht beim jeweiligen Netzknoten abschätzt. Diese Abschätzung erfolgt üblicherweise dadurch, dass das Taktverhältnis (auch als Rate Compensation Factor RCF bezeichnet) zwischen der Synchronisationstaktfrequenz und der Knotentaktfrequenz des jeweiligen Netzknotens abgeschätzt wird. Mit dem abgeschätzten Taktverhältnis kann dann eine Umrechnung der Zeitspanne zwischen Empfang einer Synchronisationsnachricht beim vorhergehenden Netzknoten und Empfang der Synchronisationsnachricht beim jeweiligen Netzknoten, gemessen in Takten der Knotentaktfrequenz, in die Takte der Synchronisationstaktfrequenz durchgeführt werden. Die sich daraus ergebende Anzahl an Takten wird dann zu den Takten der empfangenen Synchronisationsnachricht hinzuaddiert und eine entsprechend aktualisierte Synchronisationsnachricht wird von dem entsprechenden Netzknoten wieder ausgesendet. Es erweist sich hierbei als problematisch, dass Schwankungen in der Synchronisationstaktfrequenz auftreten können, welche zu einer ungenauen Abschätzung des Taktverhältnisses und somit einer fehlerbehafteten Bestimmung des Taktzählzustands der Synchronisationsuhr in den einzelnen Netzknoten führen.

Aus dem Stand der Technik ist im Bereich der industriellen Automatisierungtechnik der Standard Profinet bekannt, bei dem es sich um ein Ethernet handelt, welches industriellen Vorgaben genügt. Dieser Standard arbeitet nach dem oben dargelegten Prinzip, wonach in den Netzknoten die Taktzählzustände in den Synchronisationsnachrichten aktualisiert werden. Auf Profinet basierte Systeme verwenden zur Synchronisation der internen Uhren der Netzknoten üblicherweise den Standard IEEE 1588, der nach dem oben dargelegten Prinzip die Taktzählzustände der Synchronisationsnachrichten aktualisiert. Gemäß diesem Standard werden aufeinanderfolgend Synchronisationsnachrichten von einem Netzknoten zum nächsten in einer logischen Reihe oder Baumstruktur übertragen. Die Synchronisationsnachrichten stammen von einem Masterelement, welches das erste Element in der Reihe bzw. in der Baustruktur ist. Die Synchronisationsnachrichten enthalten ursprünglich einen Zeitstempel des Zählers einer Synchronisationsuhr in dem Masterelement, wenn eine Synchronisationsnachricht übertragen wurde. Die Netzknoten in der Reihe bzw. Baumstruktur verarbeiten diese Information und senden sie weiter. Ein Netzknoten fügt hierbei alle abgeschätzten Zeitverzögerungen zwischen dem Aussenden einer Synchronisationsnachricht vom vorhergehenden Netzknoten und seinem eigenen Aussenden der Synchronisationsnachricht als Inhalt der Synchronisationsnachricht hinzu.

Wie oben dargelegt, erweist es sich bei den aus der Stand der Technik bekannten Kommunikationsnetzen als problematisch, dass bei Veränderung der Synchronisationstaktfrequenz der Synchronisationsuhr Fehler bei der Bestimmung des Taktzählzustands in den Netzknoten auftreten, was wiederum zu einer ungenauen Synchronisation der internen Uhren der Netzknoten führt.

Das Dokument Jasperneite J. et al.: "Enhancements to the time synchronization standard IEEE-1588 for a system of cascaded bridges", Factory Communication Systems, 2004, Proceedings, 2004 IEEE International Workshop on Vienna, Austria Sept. 22-24, 2004, Piscataway, NJ, USA, IEEE, 22. September 2004 (2004-09-22), Seiten 239-244, ISBN: 0-7803-8734-1, beschreibt ein Verfahren zur Übertragung von Synchronisationsnachrichten gemäß dem Oberbegriff des Anspruchs 1. In der Druckschrift wird eine lokale Anpassung des Takts der Netzknoten basierend auf einer Steuerschleife beschrieben, um Frequenzverschiebungen zwischen den Taktfrequenzen der Netzknoten zu kompensieren.

In dem Dokument US 2004/0141526 A1 wird ein Verfahren zur Synchronisation der Takte in den Netzknoten eines Kommunikationsnetzes beschrieben, wobei die Geschwindigkeit eines Knotentakts basierend auf der Zählrate eines Synchronisationstakts und der Zählrate des Knotentakts sowie der Differenz zwischen den Zählzuständen des Synchronisationstakts und des Knotentakts angepasst wird.

Aufgabe der Erfindung ist es, ein Verfahren zur Übertragung von Synchronisationsnachrichten in einem Kommunikationsnetz zu schaffen, mit dem eine genaue Synchronisation der einzelnen internen Uhren der Netzknoten ermöglicht wird.

Diese Aufgabe wird durch die unabhängigen Patentansprüche gelöst. Weiterbildungen der Erfindung sind in den abhängigen Patentansprüchen definiert.

Das erfindungsgemäße Verfahren wird in einem Kommunikationsnetz eingesetzt, welches eine Vielzahl von miteinander kommunizierenden Netzknoten umfasst, die jeweils eine interne Uhr beinhalten, die mit einer dem jeweiligen Netzknoten zugeordneten Knotentaktfrequenz getaktet ist, wobei die Synchronisationsnachrichten zur Zeitsynchronisation der internen Uhren der Netzknoten dienen.

In dem erfindungsgemäßen Verfahren werden die Synchronisationsnachrichten aufeinander folgend von einem vorhergehenden Netzknoten zu einem nächsten Netzknoten in Abhängigkeit von einer durch eine Synchronisationsuhr vorgegebenen Synchronisationstaktfrequenz übermittelt, wobei die Synchronisationsnachrichten den Taktzählzustand der Synchronisationsuhr beinhalten. Ein jeweiliger Netzknoten erfasst dabei in vorgegebenen zeitlichen Abständen die zeitliche Veränderung des Taktverhältnisses zwischen der Synchronisationstaktfrequenz und seiner Knotentaktfrequenz basierend auf in der Vergangenheit empfangener Synchronisationsnachrichten. Auf der Basis dieser erfassten zeitlichen Veränderung des Taktverhältnisses approximiert der jeweilige Netzknoten die zeitliche Entwicklung des Taktverhältnisses durch eine Funktion, so dass ein mathematischer Zusammenhang zwischen der Zeit und des Verhaltens des Taktverhältnisses vorliegt. Auf der Basis der mit der Funktion approximierten zeitlichen Entwicklung des Taktverhältnisses aktualisiert der jeweilige Netzknoten den Taktzählzustand einer empfangenen Synchronisationsnachricht auf den Taktzählzustand beim Aussenden der Synchronisationsnachricht zum nächsten Netzknoten.

Durch die erfindungsgemäße Approximation des zeitlichen Verhaltens des Taktverhältnisses mit einer Funktion wird eine Veränderung des Taktverhältnisses aufgrund einer Veränderung der Synchronisationstaktfrequenz und/oder der Knotentaktfrequenz bei der Ermittlung des Taktzählzustands berücksichtigt. Insbesondere kann das Taktverhältnis zum Zeitpunkt des Aussendens der Synchronisationsnachricht zum nächsten Netzknoten mit der Funktion vorhergesagt werden und hierdurch eine wesentlich genauere Bestimmung des aktuellen Taktzählzustands erreicht werden.

In einer bevorzugten Ausführungsform des erfindungsgemäßen Verfahrens läuft die Aktualisierung des Taktzählzustands der Synchronisationsnachricht derart ab, dass die Anzahl an Synchronisationstakten zwischen dem Aussenden der Synchronisationsnachricht beim vorhergehenden Netzknoten und dem Aussenden der Synchronisationsnachricht beim jeweiligen Netzknoten ermittelt wird, wobei zur Ermittlung dieser Anzahl an Synchronisationstakten die approximierte zeitliche Entwicklung des Taktverhältnisses in Kombination mit einer vorgegebenen Zeitverzögerung verwendet wird, wobei die Zeitverzögerung die Übermittlungszeit einer Synchronisationsnachricht vom vorhergehenden Netzknoten zum jeweiligen Netzknoten und die Verarbeitungszeit einer empfangenen Synchronisationsnachricht im jeweiligen Netzknoten umfasst.

In einer Ausführungsform des erfindungsgemäßen Verfahrens wird mit der approximierten zeitlichen Entwicklung des Taktverhältnisses das Taktverhältnis zum Zeitpunkt des Aussendens einer Synchronisationsnachricht beim vorhergehenden Netzknoten ermittelt, wobei dieses Taktverhältnis in Kombination mit der vorgegebenen Zeitverzögerung zur Ermittlung der Anzahl an Synchronisationstakten zwischen dem Aussenden der Synchronisationsnachricht beim vorhergehenden Netzknoten und dem Aussenden der Synchronisationsnachricht beim jeweiligen Netzknoten verwendet wird. Das Taktverhältnis wird somit als konstant zwischen dem Aussenden der Synchronisationsnachricht beim vorhergehenden Netzknoten und dem Aussenden der Synchronisationsnachricht beim jeweiligen Netzknoten angenommen. Dies entspricht zwar nicht immer den realen Gegebenheiten, jedoch hat sich gezeigt, dass der sich hieraus ergebende Fehler sehr klein ist. Vorteil dieser Variante ist die einfache Berechnung der Anzahl an Synchronisationstakten innerhalb der vorgegebenen Zeitverzögerung, welche insbesondere durch Multiplikation des als konstant angenommenen Taktverhältnisses mit der Zeitverzögerung bestimmt werden kann.

Eine genauere Bestimmung der Anzahl an Synchronisationstakten innerhalb der Zeitverzögerung kann in einer Variante der Erfindung dadurch erreicht werden, dass die approximierte zeitliche Entwicklung des Taktverhältnisses über die Zeitverzögerung integriert wird und diese Integration zur Ermittlung der Anzahl an Synchronisationstakten zwischen dem Aussenden der Synchronisationsnachricht beim vorhergehenden Netzknoten und dem Aussenden der Synchronisationsnachricht beim jeweiligen Netzknoten verwendet wird. Insbesondere stellt hierbei das Integrationsergebnis diese Anzahl an Synchronisationstakten innerhalb der Zeitverzögerung dar.

In einer weiteren Variante des erfindungsgemäßen Verfahrens wird die zeitliche Veränderung des Taktverhältnisses in einem jeweiligen Netzknoten basierend auf den Mittelwerten des Taktverhältnisses zwischen vergangenen aufeinander folgenden Synchronisationsnachrichten erfasst.

Die Funktion, mit der die zeitliche Entwicklung des Taktverhältnisses approximiert wird, ist vorzugsweise eine lineare Funktion, d.h. die ermittelte zeitliche Veränderung des Taktverhältnisses stellt eine Geradensteigung dar. In einer besonders bevorzugten Ausführungsform lautet die lineare Funktion, bezeichnet als RCF(t), wie folgt:

$$RCF(t) = \Delta m \cdot (t + T_{sync}/2) + p2$$

wobei t gemessen ist ab dem Aussenden einer Synchronisationsnachricht bei einem dem jeweiligen Netzknoten vorhergehenden Netzknoten und wobei $T_{sync}$ die Zeitspanne zwischen zwei aufeinander folgenden Synchronisationsnachrichten ist.

Ferner ist $\Delta m$ eine Geradensteigung, welche der zeitlichen Veränderung des Taktverhältnisses entspricht, die basierend auf in der Vergangenheit empfangener Synchronisationsnachrichten erfasst wurde und p2 ist das gemittelte Taktverhältnis, welches zwischen zwei aufeinander folgenden Synchronisationsnachrichten zum Zeitpunkt des Aussendens der Synchronisationsnachricht beim vorhergehenden Netzknoten vorliegt.

Wie der detaillierten Beschreibung der Anmeldung entnommen werden kann, können mit obiger linearer Funktion RCF(t) Fehler bei der Ermittlung des Taktzählzustands bei einer linearen Veränderung des Taktverhältnisses vermieden werden.

Gegebenenfalls kann anstatt einer linearen Funktion auch eine Polynomfunktion zur Approximation der zeitlichen Entwicklung des Taktverhältnisses verwendet werden. Hierdurch kann die Genauigkeit des Verfahrens bei nichtlinearen Veränderungen des Taktverhältnisses erhöht werden.

In einer weiteren Ausgestaltung des erfindungsgemäßen Verfahrens wird die Synchronisationstaktfrequenz in einem Synchronisationselement in dem Kommunikationsnetz erzeugt, wobei das Synchronisationselement als ein weiterer Netzknoten angesehen werden kann, der die Synchronisationsuhr beinhaltet und die Synchronisationsnachrichten in Abhängigkeit von der Synchronisationstaktfrequenz an zumindest einen der anderen Netzknoten des Kommunikationsnetzes übermittelt.

In einer besonders bevorzugten Ausführungsform des erfindungsgemäßen Verfahrens kommunizieren die Netzknoten in dem Kommunikationsnetz gemäß dem Profinet-Standard miteinander. Ferner wird das erfindungsgemäße Verfahren vorzugsweise in einem Kommunikationsnetz in einer industriellen Automatisierungsanlage, insbesondere in einer Fertigungsstraße, eingesetzt.

Neben dem oben beschriebenen Verfahren betrifft die Erfindung ferner ein Kommunikationsnetz mit einer Vielzahl von miteinander kommunizierenden Netzknoten, welche jeweils eine interne Uhr beinhalten, die mit einer dem jeweiligen Netzknoten zugeordneten Knotentaktfrequenz getaktet ist, wobei:

- in dem Kommunikationsnetz aufeinander folgend von einem vorhergehenden Netzknoten zu einem nächsten Netzknoten Synchronisationsnachrichten zur Zeitsynchronisation der internen Uhren der Netzknoten in Abhängigkeit von einer durch eine Synchronisationsuhr vorgegebenen Synchronisationstaktfrequenz übermittelbar sind, wobei die Synchronisationsnachrichten den Taktzählzustand der Synchronisationsuhr beinhalten;
- ein jeweiliger Netzknoten in dem Kommunikationsnetz derart ausgestaltet ist, dass im Betrieb des Kommunikationsnetzes

    - der jeweilige in Netzknoten vorgegebenen zeitlichen Abständen die zeitliche Veränderung des Taktverhältnisses zwischen der Synchronisationstaktfrequenz und der jeweiligen Knotentaktfrequenz basierend auf in der Vergangenheit empfangener Synchronisationsnachrichten erfasst;
    - der jeweilige Netzknoten auf Basis der erfassten zeitlichen Veränderung des Taktverhältnisses die zeitliche Entwicklung des Taktverhältnisses durch eine Funktion approximiert;
    - der jeweilige Netzknoten auf Basis der approximierten zeitlichen Entwicklung des Taktverhältnisses den Taktzählzustand einer empfangenen Synchronisationsnachricht auf den Taktzählzustand beim Aussenden der Synchronisationsnachricht zum nächsten Netzknoten aktualisiert.

Das Kommunikationsnetz ist hierbei vorzugsweise derart ausgestaltet, dass jede Variante des oben beschriebenen Verfahrens in dem Kommunikationsnetz durchführbar ist.

Ausführungsbeispiele der Erfindung werden nachfolgend anhand der beigefügten Figuren detailliert beschrieben.

Es zeigen:

Fig. 1 eine schematische Darstellung einer Mehrzahl von Netzknoten in einem Kommunikationsnetz, zwischen denen auf der Basis des erfindungsgemäßen Verfahrens Synchronisationsnachrichten übermittelt werden; und

Fig. 2 ein Diagramm, welches die Berechnung des Taktverhältnisses und die damit verbundene Fehlervermeidung basierend auf einer Ausführungsform des erfindungsgemäßen Verfahrens wiedergibt.

Das erfindungsgemäße Verfahren wird vorzugsweise in einer industriellen Automatisierungsanlage eingesetzt, bei der verteilte Komponenten der Anlage miteinander kommunizieren, um Fertigungsabläufe, z.B. bei der Automobilherstellung, zu steuern. Hierzu kommunizieren die einzelnen Komponenten über ein Kommunikationsnetz drahtlos und/oder drahtgebunden miteinander. Die Komponenten stellen somit Netzknoten des Kommunikationsnetzes dar.

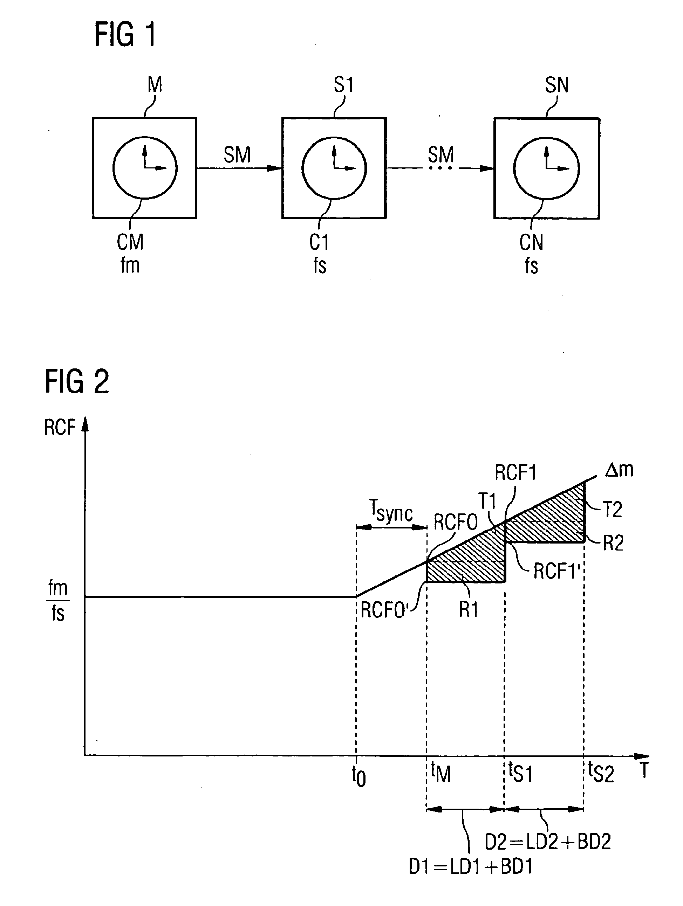

In der Ausführungsform gemäß Fig. 1 sind beispielhaft als Netzknoten sog. Slaves S1 bis SN gezeigt, wobei jeder Slave über eine entsprechende interne Uhr C1, ..., CN verfügt. Jede dieser Uhren arbeitet in einer vorgegebenen Slave-Taktfrequenz fs, welche für unterschiedliche Slaves gegebenenfalls unterschiedlich sein kann. Darüber hinaus ist in dem Kommunikationsnetz der Fig. 1 ein sog. Masterelement M vorgesehen, welches über eine Synchronisationsuhr CM verfügt, welche eine Synchronisationstaktfrequenz fm vorgibt, auf die alle internen Uhren C1, ..., CN der Slaves abgestimmt werden sollen. Um dies zu erreichen, werden Synchronisationsnachrichten SM in konstanten, eine vorgegebene Anzahl von Takten des Synchronisationstakts umfassenden Intervallen vom Masterelement M ausgesendet. Jede dieser Synchronisationsnachrichten enthält hierbei den Taktzählzustand der Uhr CM, d.h. die im Betrieb des Verfahrens bereits abgelaufenen Takte des Synchronisationstakts. Dieser Taktzustand wird dabei mit jeder Synchronisationsnachricht SM übermittelt.

Das Masterelement M und die einzelnen Netzknoten S1 bis SN kommunizieren in einer Reihe miteinander, wobei Synchronisationsnachrichten vom Masterelement M an den Knoten S1 und von diesem an den Knoten S2 usw. bis zum Knoten SN übermittelt werden. Um eine exakte Synchronisation in den einzelnen Slaves zu erreichen, muss der Taktzählzustand in den Synchronisationsnachrichten SM in den einzelnen Slaves aktualisiert werden. Deshalb ist in jedem Slave die Zeitverzögerung bekannt, die zwischen dem Aussenden einer Synchronisationsnachricht vom vorhergehenden Slave (bzw. vom Masterelement) bis zum Aussenden der Synchronisationsnachricht vom jeweiligen Slave zum nächsten Slave benötigt wird. Diese Zeitverzögerung setzt sich aus der Zeitspanne LDi und BDi (i = 1, ..., N) zusammen, wobei diese Zeitspanne für jeden Slave unterschiedlich sein kann. LDi ist hierbei die Zeitspanne, welche zur Übermittlung der Nachricht vom vorhergehenden Slave Si-1 zum nächsten Slave Si benötigt wird (LD = Line Delay). BDi ist die Verarbeitungszeit, welche im Slave Si zum Verarbeiten einer empfangenen Synchronisationsnachricht bis zum Aussenden der Synchronisationsnachricht zum nächsten Slave benötigt wird (BD = Bridge Delay). Diese Verzögerungszeit wird in dem jeweiligen Slave in Takten gemäß der Slave-Taktfrequenz angegeben.

Um nunmehr den Taktzählzustand einer empfangenen Synchronisationsnachricht SM zu aktualisieren, ist in dem jeweiligen Slave das Taktverhältnis zwischen der Synchronisationstaktfrequenz fm und der jeweiligen Slave-Taktfrequenz fs abzuschätzen. Dieses Taktverhältnis wird nachfolgend auch als RCF bezeichnet und ist in der hier beschriebenen Ausführungsform der Quotient aus fm und fs. Durch Multiplikation des abgeschätzten Taktverhältnisses mit der Zeitverzögerung erhält man die Anzahl von Zähltakten beim Wiederaussenden der zuvor empfangenen Synchronisationsnachricht. Diese Anzahl wird zu dem Taktzählzustand der empfangenen Synchronisationsnachricht hinzuaddiert, und eine Synchronisationsnachricht mit diesem aktuellen Taktzählzustand wird von dem jeweiligen Slave ausgesendet. Wie nachfolgend anhand von Fig. 2 erläutert wird, kann erfindungsgemäß eine besonders genaue Approximation des Taktverhältnisses RCF erreicht werden, so dass der Fehler bei der Aktualisierung der Taktzählzustände der Synchronisationsnachrichten sehr gering wird und hierdurch eine sehr gute Synchronisation der internen Uhren der Slaves erreicht werden kann. Der Ablauf der Synchronisation der internen Uhren ist hierbei dem Fachmann hinlänglich bekannt und wird deshalb nicht im Detail erläutert.

Fig. 2 zeigt ein Diagramm, bei dem eine mögliche zeitliche Veränderung eines Taktverhältnisses RCF wiedergegeben ist, wobei entlang der Abszisse eine absolute Zeit T wiedergegeben ist. Das Diagramm entspricht hierbei einem Szenario, bei dem das Taktverhältnis RCF zunächst auf einem konstanten Wert fm/fs ist und schließlich auf einen Punkt $t_0$ ansteigt, wobei die Zunahme des Taktverhältnisses auf eine Zunahme der Frequenz fm des Masterelements M, beispielsweise aufgrund von Temperaturschwankungen, zurückzuführen ist. In dem Diagramm der Fig. 2 sind entlang der Abszisse ferner folgende Zeitpunkte wiedergegeben:

$t_M$: Zeitpunkt des Aussendens einer Synchronisationsnachricht beim Masterelement M;
$t_{S1}$: Zeitpunkt des Aussendens einer Synchronisationsnachricht com Slave S1 zum Slave S2;
$t_{S2}$: Zeitpunkt des Aussendens einer Synchronisationsnachricht vom Slave S2 zum Slave S3.

Darüber hinaus ist in Fig. 2 die Zeitspanne $T_{sync}$ wiedergegeben, welche dem Zeitintervall zwischen zwei aufeinander folgenden Synchronisationsnachrichten entspricht. Die Zeitperiode $T_{sync}$ umfasst die zwischen zwei Synchronisationsnachrichten auftretenden Takte gemäß der lokalen Taktfrequenz fs des jeweiligen Slaves, wobei in der hier beschriebenen Ausführungsform die Taktfrequenzen der einzelnen Slaves den gleichen Wert aufweisen. In Fig. 2 sind ferner die Zeitspannen D1 und D2 wiedergegeben. D1 ist hierbei die Zeitspanne zwischen dem Aussenden einer Synchronisationsnachricht beim Masterelement M und dem Aussenden der Synchronisationsnachricht beim Slave S1 und umfasst die durch die Übermittlung der Synchronisationsnachricht vom Master zum Slave hervorgerufene Zeitverzögerung LD1 sowie die durch die Verarbeitung der Synchronisationsnachricht im Slave S1 hervorgerufene Zeitverzögerung BD1. Analog betrifft die Zeitspanne D2 die Zeitverzögerung zwischen dem Aussenden einer Synchronisationsnachricht vom Slave S1 und dem Aussenden einer Synchronisationsnachricht beim Slave S2, wobei sich diese Zeitperiode ebenso aus der Zeitverzögerung LD2 aufgrund der Übermittlung der Nachricht vom Slave S1 zum Slave S2 und der Zeitperiode BD2 zum Verarbeiten der Nachricht beim Slave S2 zusammensetzt.

In der hier beschriebenen Ausführungsform des erfindungsgemäßen Verfahrens schätzt jeder Slave über die Veränderung der Taktzählzustände einer Mehrzahl von empfangenen Synchronisationsnachrichten die zeitliche Veränderung des Taktverhältnisses RCF ab. Der Slave S1 ermittelt somit die Steigung $\Delta m$ der sich ab dem Zeitpunkt $t_0$ ergebenden Geraden. Darüber hinaus kann der Slave S1 das Taktverhältnis zum Zeitpunkt $t_M$ durch Bestimmen der Differenz zwischen den Taktzählzuständen der zum Anfangs- und Endzeitpunkt des Intervalls $T_{sync}$ vom Masterelement M ausgesendete Synchronisationsnachrichten ermitteln. Dieser Wert ist in Fig. 1 als RCF0' bezeichnet und entspricht nicht dem tatsächlichen Wert des Taktverhältnisses zum Zeitpunkt $t_M$, da das Taktverhältnis in der Ausführungsform der Fig. 2 kontinuierlich ansteigt. Der tatsächliche Wert des Taktverhältnisses zum Zeitpunkt $t_M$ ist in Fig. 2 als RCF0 bezeichnet.

Analog zum Slave S1 kann der Slave S2 das Taktverhältnis zum Zeitpunkt $t_{S1}$ bestimmen. Der hierdurch ermittelte Wert RCF1' entspricht dabei wiederum nicht dem tatsächlichen Wert RCF1 des Taktverhältnisses zum Zeitpunkt $t_{S1}$. Würde somit die Anzahl der Takte innerhalb der Zeitperioden D1 bzw. D2 auf der Basis von konstant angenommenen Werten der Taktverhältnisse RCF0' bzw. RCF1' ermittelt werden, ergäbe sich hierdurch ein Fehler, der in Fig. 2 als schraffierter Bereich angedeutet ist. Die Fläche des schraffierten Bereichs entspricht hierbei der Abweichung der Anzahl an tatsächlich auftretenden Takten des Masterelements zwischen den Zeitpunkten $t_M$ und $t_{S2}$ und der ermittelten Anzahl an Takten auf der Basis der konstant angenommenen Taktverhältnisse RCF0' bzw. RCF1'.

Der Fehler gemäß dem schraffierten Bereich teilt sich hierbei in die zwei Dreiecke T1 und T2 sowie in die zwei Rechtecke R1 und R2. Mathematisch kann der Fehler wie folgt berechnet werden:

$$\text{Fehler} = \Delta m/2 \cdot ((LD1 + BD1)^2 + (LD2 + BD2)^2 + (LD1 + BD1) \cdot T_{sync} + (LD2 + BD2) \cdot T_{sync})) \qquad (1)$$

Um diesen Fehler zu kompensieren, wird erfindungsgemäß das zeitliche Verhalten von RCF approximiert. Hierzu wird in regelmäßigen Abständen die zeitliche Veränderung von RCF ermittelt, indem die zeitliche Veränderung von RCF0' erfasst wird und damit $\Delta m$ berechnet wird. In dem Beispiel der Fig. 2 wird folglich eine Approximation des zeitlichen Verhaltens von RCF mit einer linearen Funktion vorgenommen, so dass die zeitliche Veränderung als Geradensteigung $\Delta m$ erfasst wird. Um den Offset der Geraden in vertikaler Richtung zu ermitteln, wird berücksichtigt, dass zum Zeitpunkt $t_M$ der tatsächliche Wert RCF0 des Taktverhältnisses um $\Delta m \cdot T_{sync}/2$ höher ist als der im Slave S1 ermittelte Wert des Taktverhältnisses RCF0'. Es ergibt sich somit folgende Geradenfunktion RCF(t):

$$RCF(t) = \Delta m \cdot (t + T_{sync}/2) + p2 \qquad (2)$$

Hierbei wird t gemessen ab dem Aussenden der Synchronisationsnachricht vom Masterelement M, $\Delta m$ entspricht der Geradensteigung und p2 entspricht dem Wert von RCF0'.

Durch die Ermittlung der oben genannten Geradenfunktion kann nunmehr der Wert des Taktverhältnisses RCF zum Zeitpunkt $t_{S1}$ vorhergesagt werden, und durch eine entsprechende Integration über das Zeitintervall D1 kann die exakte Anzahl an Takten gemäß der Synchronisationstaktfrequenz ermittelt werden und die Synchronisationsnachricht entsprechend aktualisiert werden. In der Praxis läuft die Integration derart ab, dass der Fehler gemäß obiger Gleichung (1) (ohne die von D2 abhängigen Terme) zu dem Wert hinzuaddiert wird, der sich aus der Multiplikation des ursprünglich vom Slave S1 falsch ermittelten Taktverhältnisses RCF0' mit der Zeitspanne D1 ergibt. Das Verfahren wird analog für den nachfolgenden Slave S2 und weitere folgende Slaves durchgeführt, so dass insgesamt der Fehler gemäß dem schraffierten Bereich in Fig. 2 nicht mehr auftritt.

Die Darstellung gemäß Fig. 2 ist lediglich eine Darstellung zur Verdeutlichung des Verfahrens, wobei die wiedergegebene Änderung des Taktverhältnisses nicht üblicherweise auftretenden Frequenzänderungen entspricht. Tatsächlich ist meistens die Fläche der Dreiecke T1 bzw. T2 wesentlich kleiner als die Fläche der Rechtecke R1 bzw. R2. Somit ist es in einer Ausführungsform der Erfindung gegebenenfalls auch möglich, dass der durch die Geradenfunktion ermittelte Wert RCF0 zum Zeitpunkt $t_M$ als konstant über das Intervall D1 angenommen wird. Ebenso kann mit dem Intervall D2 verfahren werden, wobei dann der Wert RCF1 als konstant über das Intervall angenommen wird. Die Anzahl an Takten ergibt sich dann aus der Multiplikation der Intervalllänge von D1 bzw. D2 mit dem Wert RCF0 bzw. RCF1.

Die Approximation der zeitlichen Entwicklung des Taktverhältnisses muss ferner nicht mit einer linearen Funktion erfolgen, sondern es können auch Polymone verwendet werden, wodurch eine genauere Abschätzung der zeitlichen Entwicklung des Taktverhältnisses erreicht wird.

Wie sich aus den obigen Ausführungen ergibt, kann durch eine geeignete funktionale Approximation der zeitlichen Entwicklung des Taktverhältnisses eine Vorhersage des Taktverhältnisses zum Zeitpunkt des Aussendens der Synchronisationsnachricht im jeweiligen Slave durchgeführt werden. Auf diese Weise können effektiv Fehler kompensiert werden, welche in Fig. 2 als schraffierter Bereich angedeutet sind. Es kann somit eine sehr genaue Bestimmung der Taktzählzustände des Masterelements vorgenommen werden und mit den Synchronisationsnachrichten übertragen werden. Dies führt zu einer exakten Synchronisation der einzelnen internen Uhren der Slaves.

**Patentansprüche**

1. Verfahren zur Übertragung von Synchronisationsnachrichten (SM) in einem Kommunikationsnetz, wobei das Kommunikationsnetz eine Vielzahl von miteinander kommunizierenden Netzknoten (S1,..., SN) umfasst, welche jeweils eine interne Uhr (C1, ..., CN) beinhalten, die mit einer dem jeweiligen Netzknoten (S1, ..., SN) zugeordneten Knotentaktfrequenz (fs) getaktet ist, wobei die Synchronisationsnachrichten (SM) zur Zeitsynchronisation der internen Uhren (C1, ..., CN) der Netzknoten (S1,..., SN) dienen, bei dem:

   - die Synchronisationsnachrichten (SM) aufeinander folgend von einem vorhergehenden Netzknoten (S1,..., SN) zu einem nächsten Netzknoten (S1,..., SN) in Abhängigkeit von einer durch eine Synchronisationsuhr (CM) vorgegebenen Synchronisationstaktfrequenz (fm) übermittelt werden, wobei die Synchronisationsnachrichten (SM) den Taktzählzustand der Synchronisationsuhr (CM) beinhalten;

   **dadurch gekennzeichnet, dass**

   - ein jeweiliger Netzknoten in vorgegebenen zeitlichen Abständen die zeitliche Veränderung des Taktverhältnisses (RCF) zwischen der Synchronisationstaktfrequenz (fm) und seiner Knotentaktfrequenz (fs) basierend auf in der Vergangenheit empfangener Synchronisationsnachrichten (SM) erfasst;
   - der jeweilige Netzknoten (S1,..., SN) auf Basis der erfassten zeitlichen Veränderung des Taktverhältnisses (RCF) die zeitliche Entwicklung des Taktverhältnisses (RCF) durch eine Funktion approximiert;
   - der jeweilige Netzknoten (S1,..., SN) auf Basis der approximierten zeitlichen Entwicklung des Taktverhältnisses (RCF) den Taktzählzustand einer empfangenen Synchronisationsnachricht (SM) auf den Taktzählzustand beim Aussenden der Synchronisationsnachricht (SM) zum nächsten Netzknoten (S1,..., SN) aktualisiert.

2. Verfahren nach Anspruch 1, bei dem zur Aktualisierung des Taktzählzustandes der Synchronisationsnachricht (SM) die Anzahl an Synchronisationstakten zwischen dem Aussenden der Synchronisationsnachricht (SM) beim vorhergehenden Netzknoten (S1,..., SN) und dem Aussenden der Synchronisationsnachricht (SM) beim jeweiligen Netzknoten (S1,..., SN) ermittelt wird, wobei zur Ermittlung dieser Anzahl an Synchronisationstakten die approximierte zeitliche Entwicklung des Taktverhältnisses (RCF) in Kombination mit einer vorgegebenen Zeitverzögerung (D1, D2) verwendet wird, wobei die Zeitverzögerung (D1, D2) die Übermittlungszeit (LD1, LD2) der Synchronisationsnachricht (SM) vom vorhergehenden Netzknoten (S1,..., SN) zum jeweiligen Netzknoten (S1,..., SN) und die Verarbeitungszeit (BD1, BD2) der empfangenen Synchronisationsnachricht (SM) im jeweilige Netzknoten (S1,..., SN) umfasst.

3. Verfahren nach Anspruch 2, bei dem mit der approximierten zeitlichen Entwicklung des Taktverhältnisses (RCF) das Taktverhältnis (RCF) zum Zeitpunkt des Aussendens einer Synchronisationsnachricht (SM) beim vorhergehenden Netzknoten (S1,..., SN) ermittelt wird, wobei dieses Taktverhältnis (RCF) in Kombination mit der vorgegebenen Zeitverzögerung (D1, D2) zur Ermittlung der Anzahl an Synchronisationstakten zwischen dem Aussenden der Synchronisationsnachricht(SM) beim vorhergehenden Netzknoten (S1,..., SN) und dem Aussenden der Synchronisationsnachricht beim jeweiligen Netzknoten (S1,..., SN) verwendet wird.

4. Verfahren nach Anspruch 2, bei dem die approximierte zeitliche Entwicklung des Taktverhältnisses (RCF) über die vorgegebene Zeitverzögerung (D1, D2) integriert wird und diese Integration zur Ermittlung der Anzahl an Synchronisationstakten zwischen dem Aussenden der Synchronisationsnachricht (SM) beim vorhergehenden Netzknoten (S1,..., SN) und dem Aussenden der Synchronisationsnachricht (SM) beim jeweiligen Netzknoten (S1,..., SN) verwendet wird.

5. Verfahren nach einem der vorhergehenden Ansprüche, bei dem die zeitliche Veränderung des Taktverhältnisses (RCF) in einem jeweiligen Netzknoten (S1,..., SN) basierend auf den Mittelwerten des Taktverhältnisses (RCF) zwischen vergangenen aufeinander folgenden Synchronisationsnachrichten (SM) erfasst wird.

6. Verfahren nach einem der vorhergehenden Ansprüche, bei dem die Funktion, mit der die zeitliche Entwicklung des Taktverhältnisses approximiert wird, eine lineare Funktion ist.

7. Verfahren nach Anspruch 6, bei dem die lineare Funktion RCF(t) wie folgt lautet:

$$RCF(t) = \Delta m \cdot (t + T_{sync}/2) + p2$$

wobei t gemessen ist ab dem Aussenden einer Synchronisationsnachricht (SM) bei einem dem jeweiligen Netzknoten (S1, ..., SN) vorhergehenden Netzknoten (S1,..., SN) ist;
wobei $T_{sync}$ die Zeitspanne zwischen zwei aufeinander folgenden Synchronisationsnachrichten (SM) ist;
wobei $\Delta m$ eine Geradensteigung ist, welche der zeitlichen Veränderung des Taktverhältnisses entspricht, die basierend auf in der Vergangenheit empfangener Synchronisationsnachrichten (SM) erfasst wurde;
wobei p2 das gemittelte Taktverhältnis ist, welches zwischen zwei aufeinander folgenden Synchronisationsnachrichten (SM) zum Zeitpunkt des Aussendens der Synchronisationsnachricht (SM) beim vorhergehenden Netzknoten (S1,..., SN) vorliegt.

8. Verfahren nach einem der Ansprüche 1 bis 5, bei dem die Funktion, mit der die zeitliche Entwicklung des Taktverhältnisses approximiert wird, eine Polynomfunktion ist.

9. Verfahren nach einem der vorhergehenden Ansprüche, bei dem die Synchronisationstaktfrequenz (fm) in einem Synchronisationselement (M) in dem Kommunikationsnetz erzeugt wird, wobei das Synchronisationselement (M) die Synchronisationsuhr (CM) beinhaltet und die Synchronisationsnachrichten (SM) in Abhängigkeit von der Synchronisationstaktfrequenz (fm) an zumindest einen der Netzknoten (S1,..., SN) des Kommunikationsnetzes übermittelt.

10. Verfahren nach einem der vorhergehenden Ansprüche, bei dem die Netzknoten (S1,..., SN) in dem Kommunikationsnetz gemäß dem Profinet-Standard miteinander kommunizieren.

11. Verfahren nach einem der vorhergehenden Ansprüche, wobei das Verfahren in einem Kommunikationsnetz in einer industriellen Automatisierungsanlage, insbesondere in einer Fertigungsstraße, eingesetzt wird.

12. Kommunikationsnetz mit einer Vielzahl von miteinander kommunizierenden Netzknoten (S1,..., SN), welche jeweils eine interne Uhr (C1, ..., CN) beinhalten, die mit einer dem jeweiligen Netzknoten (S1, ..., SN) zugeordneten Knotentaktfrequenz (fs) getaktet ist, wobei:

in dem Kommunikationsnetz aufeinander folgend von einem vorhergehenden Netzknoten (S1,..., SN) zu einem nächsten Netzknoten (S1,..., SN) Synchronisationsnachrichten (SM) zur Zeitsynchronisation der internen Uhren (C1, ..., CN) der Netzknoten (S1,..., SN) in Abhängigkeit von einer durch eine Synchronisationsuhr (CM) vorgegebenen Synchronisationstaktfrequenz (fm) übermittelbar sind, wobei die Synchronisationsnachrichten (SM) den Taktzählzustand der Synchronisationsuhr (CM) beinhalten;
**dadurch gekennzeichnet, dass**
ein jeweiliger Netzknoten (S1, ..., SN) in dem Kommunikationsnetz derart ausgestaltet ist, dass im Betrieb des Kommunikationsnetzes

- der jeweilige Netzknoten (S1, ..., SN) in vorgegebenen zeitlichen Abständen die zeitliche Veränderung des Taktverhältnisses (RCF) zwischen der Synchronisationstaktfrequenz (fm) und seiner Knotentaktfrequenz (fs) basierend auf in der Vergangenheit empfangener Synchronisationsnachrichten (SM) erfasst;
- der jeweilige Netzknoten (S1,..., SN) auf Basis der erfassten zeitlichen Veränderung des Taktverhältnisses (RCF) die zeitliche Entwicklung des Taktverhältnisses (RCF) durch eine Funktion approximiert;
- der jeweilige Netzknoten (S1,..., SN) auf Basis der approximierten zeitlichen Entwicklung des Taktverhältnisses (RCF) den Taktzählzustand einer empfangenen Synchronisationsnachricht (SM) auf den Taktzählzustand beim Aussenden der Synchronisationsnachricht (SM) zum nächsten Netzknoten (S1,..., SN) aktualisiert.

13. Kommunikationsnetz nach Anspruch 12, wobei das Kommunikationsnetz derart ausgestaltet ist, dass ein Verfahren nach einem der Ansprüche 2 bis 11 in dem Kommunikationsnetz durchführbar ist.

**Claims**

1. Method for transmitting synchronisation messages (SM) in a communication network, the communication network comprising a plurality of network nodes communicating with one another (S1,..., SN), each having an internal clock (C1, ..., CN), which is timed at a node clock frequency (fs) assigned to the respective network node (S1, ..., SN), the synchronisation messages (SM) serving to synchronise the times of the internal clocks (C1, ..., CN) of the network nodes (S1,..., SN) wherein:

   - the synchronisation messages (SM) are sent successively from a preceding network node (S1,..., SN) to a subsequent network node (S1,..., SN) as a function of a synchronisation clock frequency (fm) predefined by a synchronisation clock (CM), the synchronisation messages (SM) containing the pulse counter status of the synchronisation clock (CM);

   **characterised in that**

   - a respective network node detects the change over time in the pulse ratio (RCF) between the synchronisation clock frequency (fm) and its node clock frequency (fs) at predefined time intervals based on synchronisation messages (SM) received in the past;
   - the respective network node (S1,..., SN) approximates the pattern over time of the pulse ratio (RCF) on the basis of the detected change over time in the pulse ratio (RCF) by means of a function;
   - the respective network node (S1,..., SN) updates the pulse counter status of a received synchronisation message (SM) to the pulse counter status on transmission of the synchronisation message (SM) to the next network node (S1,..., SN) on the basis of the approximated pattern over time of the pulse ratio (RCF).

2. Method according to claim 1, wherein to update the pulse counter status of the synchronisation message (SM) the number of synchronisation pulses between transmission of the synchronisation message (SM) at the preceding network node (S1,..., SN) and transmission of the synchronisation message (SM) at the respective network node (S1,..., SN) is determined, with the approximated pattern over time of the pulse ratio (RCF) in combination with a predefined time delay (D1, D2) being used to determine this number of synchronisation pulses, the time delay (D1, D2) comprising the transmission time (LD1, LD2) for the synchronisation message (SM) from the preceding network node (S1,..., SN) to the respective network node (S1,..., SN) and the processing time (BD1, BD2) for the received synchronisation message (SM) in the respective network node (S1,..., SN).

3. Method according to claim 2, wherein the pulse ratio (RCF) at the time of transmission of a synchronisation message (SM) at the preceding network node (S1,..., SN) is determined using the approximated pattern over time of the pulse ratio (RCF), this pulse ratio (RCF) in combination with the predefined time delay (D1, D2) being used to determine the number of synchronisation pulses between transmission of the synchronisation message (SM) at the preceding network node (S1,..., SN) and transmission of the synchronisation message at the respective network node (S1,..., SN).

4. Method according to claim 2, wherein the approximated pattern over time of the pulse ratio (RCF) is integrated over the predefined time delay (D1, D2) and this integration is used to determine the number of synchronisation pulses between transmission of the synchronisation message (SM) at the preceding network node (S1,..., SN) and transmission of the synchronisation message (SM) at the respective network node (S1,..., SN).

5. Method according to one of the preceding claims, wherein the change over time in the pulse ratio (RCF) in a respective network node (S1,..., SN) is detected based on mean values of the pulse ratio (RCF) between past successive synchronisation messages (SM).

6. Method according to one of the preceding claims, wherein the function used to approximate the pattern over time of the pulse ratio is a linear function.

7. Method according to claim 6, wherein the linear function RCF(t) is as follows:

$$RCF(t) = \Delta m \cdot (t + T_{sync}/2) + p2$$

where t is measured from transmission of a synchronisation message (SM) at a network node (S1,..., SN) preceding the respective network node (S1, ..., SN);

where $T_{sync}$ is the time interval between two successive synchronisation messages (SM);

where $\Delta m$ is a straight line gradient, which corresponds to the change over time in the pulse ratio detected based on synchronisation messages (SM) received in the past;

where p2 is the mean pulse ratio between two successive synchronisation messages (SM) at the time of transmission of the synchronisation message (SM) at the preceding network node (S1,..., SN).

8. Method according to one of claims 1 to 5, wherein the function used to approximate the pattern over time of the pulse ratio is a polynomial function.

9. Method according to one of the preceding claims, wherein the synchronisation clock frequency (fm) is generated in a synchronisation element (M) in the communication network, the synchronisation element (M) containing the synchronisation clock (CM) and transmitting the synchronisation messages (SM) as a function of the synchronisation clock frequency (fm) to at least one of the network nodes (S1,..., SN) of the communication network.

10. Method according to one of the preceding claims, wherein the network nodes (S1,..., SN) in the communication network communicate with one another according to the Profinet standard.

11. Method according to one of the preceding claims, the method being deployed in a communication network in an industrial automation system, in particular in a production line.

12. Communication network with a plurality of network nodes (S1,..., SN) communicating with one another, each containing an internal clock (C1, ..., CN), which is timed at a node clock frequency (fs) assigned to the respective network node (S1, ..., SN), wherein:

in the communication network synchronisation messages (SM) can be sent successively from a preceding network node (S1,..., SN) to a subsequent network node (S1,..., SN) to synchronise the times of the internal clocks (C1, ..., CN) of the network nodes (S1,..., SN) as a function of a synchronisation clock frequency (fm) predefined by a synchronisation clock (CM), the synchronisation messages (SM) containing the pulse counter status of the synchronisation clock (CM);
**characterised in that**
a respective network node (S1,..., SN) in the communication network is embodied so that during operation of the communication network

- the respective network node (S1,..., SN) detects the change over time in the pulse ratio (RCF) between the synchronisation clock frequency (fm) and its node clock frequency (fs) at predefined time intervals based on synchronisation messages (SM) received in the past;
- the respective network node (S1,..., SN) approximates the pattern over time of the pulse ratio (RCF) on the basis of the detected change over time in the pulse ratio (RCF) by means of a function;
- the respective network node (S1,..., SN) updates the pulse counter status of a received synchronisation message (SM) to the pulse counter status on transmission of the synchronisation message (SM) to the next network node (S1,..., SN) on the basis of the approximated pattern over time of the pulse ratio (RCF).

13. Communication network according to claim 12, the communication network being embodied in such a manner that a method according to one of claims 2 to 11 can be implemented in the communication network.

## Revendications

1. Procédé de transmission de messages de synchronisation (SM) dans un réseau de communication, le réseau de communication comprenant une pluralité de noeuds de réseau (S1, ..., SN) qui communiquent entre eux et qui comportent chacun une horloge interne (C1, ..., CN) qui est cadencée avec une fréquence d'impulsion de noeud (fs) associée au noeud de réseau respectif (S1, ..., SN), les messages de synchronisation (SM) servant à la synchronisation temporelle des horloges internes (C1, ..., CN) des noeuds de réseau (S1, ..., SN), dans lequel :

- les messages de synchronisation (SM) sont transmis successivement d'un noeud de réseau précédent (S1, ..., SN) à un noeud de réseau suivant (S1, ..., SN) en fonction d'une fréquence d'impulsion de synchronisation (fm) donnée par une horloge de synchronisation (CM), les messages de synchronisation (SM) incluant l'état de comptage des impulsions de l'horloge de synchronisation (CM) ;

**caractérisé en ce** qui :

- un noeud de réseau respectif saisit, à intervalles de temps prédéterminés, la modification temporelle du rapport d'impulsion (RCF) entre la fréquence d'impulsion de synchronisation (fm) et sa fréquence d'impulsion de noeud (fs) sur la base de messages de synchronisation (SM) reçus dans le passé ;
- le noeud de réseau respectif (S1, ..., SN) approche l'évolution temporelle du rapport d'impulsion (RCF) par une fonction sur la base de la modification temporelle saisie du rapport d'impulsion (RCF) ;
- sur la base de l'évolution temporelle approchée du rapport d'impulsion (RCF), le noeud de réseau respectif (S1, ..., SN) actualise l'état de comptage des impulsions d'un message de synchronisation reçu (SM) sur l'état de comptage des impulsions à l'envoi du message de synchronisation (SM) au noeud de réseau suivant (S1, ..., SN).

2. Procédé selon la revendication 1, dans lequel est déterminé, pour l'actualisation de l'état de comptage des impulsions du message de synchronisation (SM), le nombre d'impulsions de synchronisation entre l'émission du message de synchronisation (SM) au niveau du noeud de réseau précédent (S1, ...., SN) et l'émission du message de synchronisation (S) au niveau du noeud de réseau respectif (S1, ..., SN), l'évolution temporelle approchée du rapport d'impulsion (RCF) étant utilisée en combinaison avec un retard temporel prédéterminé (D1, D2) pour déterminer ce nombre d'impulsions de synchronisation, le retard temporel (D1, D2) incluant le temps de transmission (LD1, LD2) du message de synchronisation (SM) du noeud de réseau précédent (S1, ..., SN) au noeud de réseau respectif (S1, ..., SN) et le temps de traitement (BD1, BD2) du message de synchronisation reçu (SM) dans le noeud de réseau respectif (S1, ..., SN).

3. Procédé selon la revendication 2, dans lequel est déterminé, avec l'évolution temporelle approchée du rapport d'impulsion (RCF), le rapport d'impulsion (RCF) au moment de l'émission d'un message de synchronisation (SM) au niveau du noeud de réseau précédent (S1, ...., SN), ce rapport d'impulsion (RCF) étant utilisé en combinaison avec le retard temporel prédéterminé (D1, D2) pour déterminer le nombre d'impulsions de synchronisation entre l'émission du message de synchronisation (SM) au niveau du noeud de réseau précédent (S1, ...., SN) et l'émission du message de synchronisation au niveau du noeud de réseau respectif (S1, ..., SN).

4. Procédé selon la revendication 2, dans lequel l'évolution temporelle approchée du rapport d'impulsion (RCF) est intégrée sur le retard temporel prédéterminé (D1, D2) et cette intégration est utilisée pour déterminer le nombre d'impulsions de synchronisation entre l'émission du message de synchronisation (SM) au niveau du noeud de réseau précédent (S1, ...., SN) et l'émission du message de synchronisation (SM) au niveau du noeud de réseau respectif (S1, ..., SN).

5. Procédé selon l'une des revendications précédentes, dans lequel la modification temporelle du rapport d'impulsion (RCF) est saisie dans un noeud de réseau respectif (S1, ..., SN) sur la base des valeurs moyennes du rapport d'impulsion (RCF) entre des messages de synchronisation passés successifs (SM).

6. Procédé selon l'une des revendications précédentes, dans lequel la fonction par laquelle l'évolution temporelle du rapport d'impulsion est approchée est une fonction linéaire.

7. Procédé selon la revendication 6, dans lequel la fonction linéaire RCF(t) se présente comme suit :

$$RCF(t) = \Delta m \cdot (t + T_{sync}/2) + p2,$$

t étant mesuré à partir de l'émission d'un message de synchronisation (SM) au niveau du noeud de réseau (S1, ..., SN) précédant le noeud de réseau respectif (S1, ..., SN) ;

$T_{sync}$ étant l'intervalle de temps entre deux messages de synchronisation successifs (SM) ;

$\Delta m$ étant une pente de droite qui correspond à la modification temporelle du rapport d'impulsion qui a été saisie sur la base de messages de synchronisation (SM) reçus dans le passé ;

p2 étant le rapport d'impulsion moyen entre deux messages de synchronisation successifs (SM) au moment de l'émission du message de synchronisation (SM) au niveau du noeud de réseau précédent (S1, ..., SN).

8. Procédé selon l'une des revendications 1 à 5, dans lequel la fonction par laquelle l'évolution temporelle du rapport d'impulsion est approchée est une fonction polynomiale.

9. Procédé selon l'une des revendications précédentes, dans lequel la fréquence d'impulsion de synchronisation (fm) est générée dans un élément de synchronisation (M) dans le réseau de communication, l'élément de synchronisation (M) contenant l'horloge de synchronisation (CM) et transmettant les messages de synchronisation (SM) en fonction de la fréquence d'impulsion de synchronisation (fm) à au moins l'un des noeuds de réseau (S1, ..., SN) du réseau de communication.

10. Procédé selon l'une des revendications précédentes, dans lequel les noeuds de réseau (S1, ..., SN), dans le réseau de communication, communiquent entre eux selon le standard Profinet.

11. Procédé selon l'une des revendications précédentes, le procédé étant mis en oeuvre dans un réseau de communication dans une installation d'automatisation industrielle, et plus particulièrement dans une chaîne de production.

12. Réseau de communication avec une pluralité de noeuds de réseau (S1, ..., SN) qui communiquent entre eux et qui comportent chacun une horloge interne (C1, ..., CN) qui est cadencée avec une fréquence d'impulsion de noeud (fs) associée au noeud de réseau respectif (S1, ..., SN), des messages de synchronisation (SM) servant à la synchronisation temporelle des horloges internes (C1, ..., CN) des noeuds de réseau (S1, ..., SN) pouvant être transmis successivement, dans le réseau de communication, d'un noeud de réseau précédent (S1, ..., SN) à un noeud de réseau suivant (S1, ..., SN) en fonction d'une fréquence d'impulsion de synchronisation (fm) donnée par une horloge de synchronisation (CM), les messages de synchronisation (SM) incluant l'état de comptage des impulsions de l'horloge de synchronisation (CM), **caractérisé en ce qu'**un noeud de réseau respectif (S1, ..., SN) est réalisé de manière telle, dans le réseau de communication, que, pendant le fonctionnement du réseau de communication,

- le noeud de réseau respectif (S1, ..., SN) saisit, à intervalles de temps prédéterminés, la modification temporelle du rapport d'impulsion (RCF) entre la fréquence d'impulsion de synchronisation (fm) et sa fréquence d'impulsion de noeud (fs) sur la base de messages de synchronisation (SM) reçus dans le passé ;
- le noeud de réseau respectif (S1, ..., SN) approche l'évolution temporelle du rapport d'impulsion (RCF) par une fonction sur la base de la modification temporelle saisie du rapport d'impulsion (RCF) ;
- sur la base de l'évolution temporelle approchée du rapport d'impulsion (RCF), le noeud de réseau respectif (S1, ..., SN) actualise l'état de comptage des impulsions d'un message de synchronisation reçu (SM) sur l'état de comptage des impulsions à l'envoi du message de synchronisation (SM) au noeud de réseau suivant (S1, ..., SN).

13. Réseau de communication selon la revendication 12, le réseau de communication étant réalisé de manière telle qu'un procédé selon l'une des revendications 2 à 11 peut être exécuté dans le réseau de communication.

# FIG 1

# FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 20040141526 A1

**In der Beschreibung aufgeführte Nicht-Patentliteratur**

• **Jasperneite J. et al.** Enhancements to the time synchronization standard IEEE-1588 for a system of cascaded bridges. *Factory Communication Systems, 2004, Proceedings, 2004 IEEE International Workshop on Vienna,* 22. September 2004, 239-244